Europäisches Patentamt

European Patent Office

Office européen des brevets

(19)

(11) Veröffentlichungsnummer: **0 264 657 B1**

## (12) EUROPÄISCHE PATENTSCHRIFT

(45) Veröffentlichungstag der Patentschrift: **03.04.91**

(51) Int. Cl.⁵: **B28D 7/02, E21C 7/00**

(21) Anmeldenummer: **87114022.4**

(22) Anmeldetag: **25.09.87**

(54) **Bohrwerkzeug mit austauschbarer Förderwendel.**

(30) Priorität: **18.10.86 DE 3635538**

(43) Veröffentlichungstag der Anmeldung:
**27.04.88 Patentblatt 88/17**

(45) Bekanntmachung des Hinweises auf die
Patenterteilung:
**03.04.91 Patentblatt 91/14**

(84) Benannte Vertragsstaaten:
**CH DE FR GB IT LI**

(56) Entgegenhaltungen:
**CH-A- 656 920**
**DE-A- 2 543 578**
**DE-A- 3 517 560**
**DE-C- 269 356**

(73) Patentinhaber: **Hawera Probst GmbH + Co.**
**Schützenstrasse 77**
**W-7980 Ravensburg(DE)**

(72) Erfinder: **Peetz, Wolfgang, Dipl.-Ing.**
**Im Kalkofen 51**
**W-7981 Blitzenreute(DE)**
Erfinder: **Moser, Bernhard**
**Ulrichstrasse 31**
**W-7963 Altshausen(DE)**

(74) Vertreter: **Patentanwälte Dipl.-Ing. E. Eisele**
**Dr.-Ing. H. Otten**
**Seestrasse 42**
**W-7980 Ravensburg(DE)**

## Beschreibung

Beschreibung:

Die Erfindung betrifft ein Bohrwerkzeug mit austauschbarer Förderwendel nach dem Oberbegriff des Anspruchs 1.

Aus dem deutschen Gebrauchsmuster der Anmelderin DE-U-85 14 422 ist eine aufsteckbare Förderwendel bekanntgeworden, bei der die axiale Sicherung der Aufsteckwendel mittels einer Axialabstützung erfolgt, wobei der Bohrerschaft im Bereich der Unterkante der Aufsteckwendel eine Einstichnut zur Aufnahme der Abstützvorrichtung aufweist und wobei eine radiale Aufweitung der Abstützvorrichtung durch kraftschlüssige oder formschlüssige Mittel vermieden wird.

Bohrwerkzeuge mit austauschbaren Förderwendeln werden vorwiegend zur Herstellung von Durchbrüchen benutzt, unter Verwendung von elektrischen oder pneumatisch angetriebenen Bohrhämmern. Dabei ist der Bohrerkopf als Kreuzbohrkopf oder als Vollbohrkopf, jeweils mit Hartmetall bestückt, ausgebildet. Derartige Werkzeuge sind beispielsweise in der DE-A- 26 39 310, DE-A- 30 44 775 DE-A- 25 43 578 dargestellt.

Aus der zuletzt genannten DE-A- 25 43 578 A1 ist insbesondere ein Gesteinsbohrer nach der Gattung des Anspruchs 1 bekannt geworden, der ebenfalls eine austauschbare Förderwendel aufweist, die sich formschlüssig am Bohrerkopf abstützt und die an ihrem dem Bohrerschaft zugewandten Ende durch eine abstützende Abstützvorrichtung axial gesichert ist.

Beim Herstellen von Durchbrüchen vor allem in klüftigem Gestein ist die aufsteckbare Förderwendel hohen Kräften dann ausgesetzt, wenn sich beispielsweise Gestein zwischen dem Bohrloch und der Förderwendel verklemmt. Außerdem kann es vorkommen, daß beim Durchbohren die Förderwendel im Bohrloch hängenbleibt und diese, bei weiterer Schlagbelastung auf den Bohrerschaft, einschließlich der axialen Befestigung, vom Schaft geschoben bzw. zerstört wird. Durch die axial feste Begrenzung und Befestigung der Wendel tritt auch durch die hohen axialen Vibrationen ein axiales Spiel auf, wodurch die Konstruktion den Eindruck einer schlechten Verarbeitung vermittelt.

Die oben geschilderten Nachteile treffen sowohl für durchgehende Förderwendeln, d. h. Förderwendeln mit bohrerähnlicher Außenstruktur, als auch für gewickelte Förderwendeln zu.

Der Erfindung liegt die Aufgabe zugrunde, ein Bohrwerkzeug der einleitend bezeichnenden Art dahin gehend zu verbessern, daß die Förderwendel im Betrieb stets einen festen axialen Sitz aufweist und darüber hinaus bei einem Verklemmen der Förderwendel gegenüber dem Bohrerschaft keine Beschädigung oder Zerstörung der Förderwendel auftritt.

Diese Aufgabe wird ausgehend von einem Bohrwerkzeug der einleitend bezeichnenden Art erfindungsgemäß durch die kennzeichnenden Merkmale des Anspruchs 1 gelöst.

In den Unteransprüchen sind vorteilhafte Weiterbildungen und Verbesserungen des im Hauptanspruch angegebenen Bohrwerkzeugs angegeben.

Der Erfindung liegt der Kerngedanke zugrunde, daß die axiale Absicherung bzw. Abstützung der Förderwendel durch eine zusätzliche Feder stets einen optimalen Sitz bzw. Anlage der Förderwendel an den Bohrerkopf gewährleistet. Die Förderwendel ist deshalb spielfrei zwischen Bohrerkopf und axialer Abstützung gelagert. Andererseits ist vorgesehen, daß die Förderwendel gezielt ein axiales Spiel gegenüber dem Schaft erhält. Im Falle eines Festsitzens bzw. eines Blockierens der Förderwendel soll sich diese axial verschieben und der Bohrerschaft ohne Förderwendel frei verdrehbar sein. Hierdurch wird eine Zerstörung insbesondere leichter Kunststoffwendeln vermieden. Das durch die Abstützfeder vorgegebene axiale Spiel wird vorzugsweise derart bemessen, daß die Förderwendel aus dem Mitnahmeformschluß am Bohrerkopf axial herausschiebbar und der Bohrerschaft bei blockierter Förderwendel trotzdem frei drehbar ist. Die notwendige axiale Verschiebbarkeit hängt deshalb von der geometrischen Ausbildung des Bohrerkopfs bzw. der formschlüssigen Mitnahmeeinrichtung zwischen austauschbarer Förderwendel und Bohrerkopf ab.

In Weiterbildung der Erfindung ist es vorteilhaft, daß die Wickelrichtung der Abstützfeder entgegengesetzt zur Drehrichtung der Förderwendel ausgebildet ist, damit sich die Abstützfeder bei blockierter Förderwendel nicht aufspreizt.

Als austauschbare Förderwendel ist insbesondere eine Massiv-Kunststoffwendel geeignet. Es können jedoch auch andere Arten von Aufsteckwendeln nach dem erfindungsgemäßen Prinzip verwendet werden, insbesondere eine Förderwendel aus einem aufgewickelten T-, L-, Z-Profil, wie in der älteren Anmeldung DE-A- 35 17 560.5 der Anmelderin vorgeschlagen.

Besonders vorteilhaft können mittels der Erfindung auch Wendelteilstücke zum Zwecke der Verlängerung der Förderwendel problemlos über Formschluß miteinander gekuppelt werden. Dabei erfolgt die Kupplung über formschlüssige Verbindungselemente wie Mitnahmestifte, Keil und Keilnut usw.

Erfindungsgemäß ist die Abstützkraft der Abstützfeder derart bemessen, daß beim Bohren übliche axiale Kräfte auf die Förderwendel kompensiert werden. Hier empfiehlt sich eine Abstützfeder mit flacher Federkennlinie, so daß bei einer Überbeanspruchung die Förderwendel aus dem Formschluß mit dem Bohrwerkzeug herausgebracht wird.

Vorteilhafte und zweckmäßige Ausführungsbeispiele der Erfindung sind in der Zeichnung dargestellt und in der nachfolgenden Beschreibung näher erläutert. Es zeigen

Fig. 1 ein erfindungsgemäßes Bohrwerkzeug in Seitenansicht im unbelasteten Zustand,

Fig. 2 das Bohrwerkzeug nach Fig. 1 mit blockierter Förderwendel und axialer Verschiebung gegenüber dem Schaft,

Fig. 3 ein Bohrwerkzeug mit zwei übereinander angeordneten Förderwendeln, die über Formschluß miteinander verbunden sind und

Fig. 4 ein Bohrwerkzeug mit gewickelter Förderwendel.

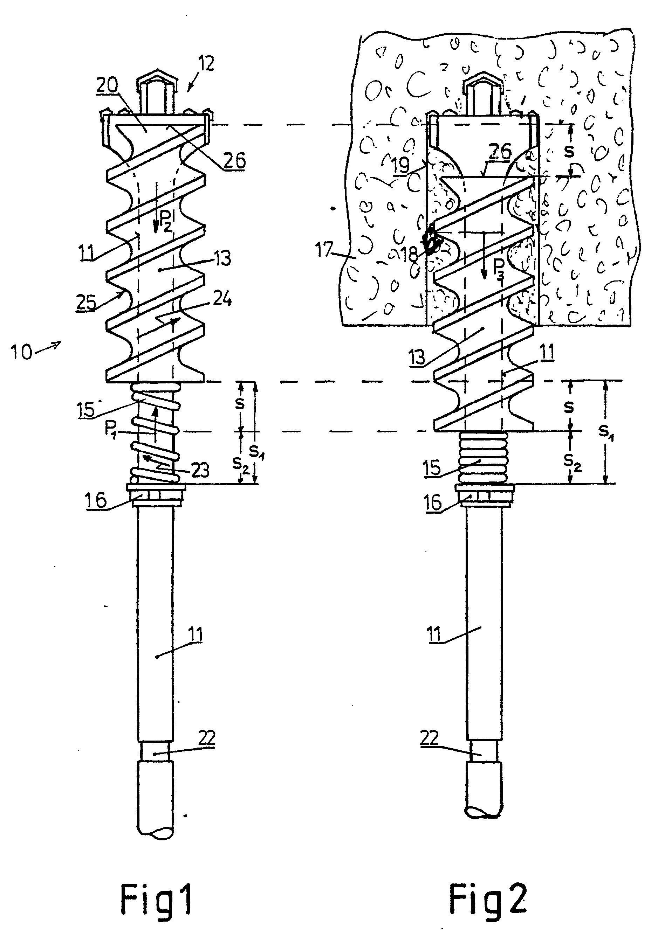

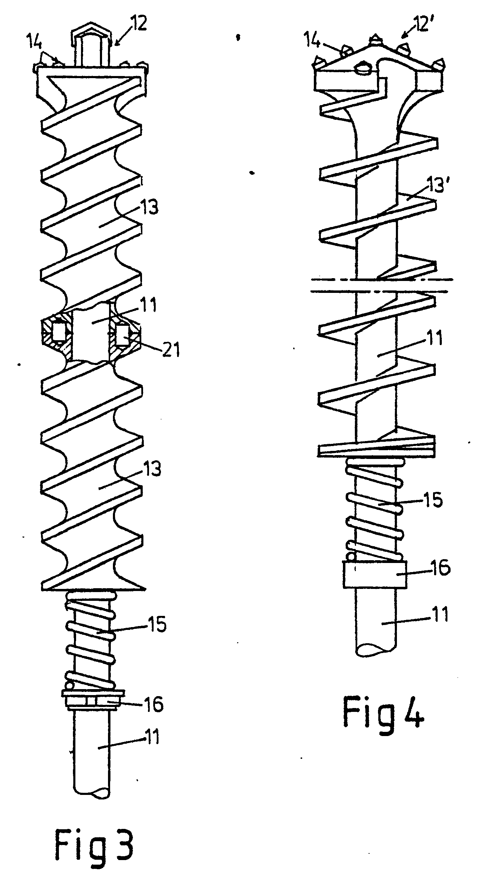

Das in den Figuren 1 und 2 dargestellte Bohrwerkzeug (10) besteht aus einem Bohrerschaft (11) mit Kreuzbohrkrone (12), wie beispielsweise in der DE 34 26 977 A1, Fig. 3, 4 dargestellt und beschrieben zur Herstellung von Mauerdurchbrüchen o. dgl. Die aufsteckbare und auswechselbare Förderwendel (13) ist mit dem Bohrerkopf (12) formschlüssig und verdrehgesichert verbunden. Die Aufsteckwendel in Fig. 1 ist als vollprofilierte Kunststoffwendel ausgebildet, d. h. die Förderfläche hat ein übliches Bohrerwendelprofil.

Anstelle der Massiv-Kunststoffwendel (13) kann auch eine gewickelte Förderwendel (13') entsprechend der Darstellung in Fig. 4 oder ähnliche verwendet werden. Dieses Bohrwerkzeug ist darüber hinaus mit einer als Vollkopf (12') ausgestalteten Bohrkrone mit Hartmetalleinsätzen (14) ausgebildet.

Erfindungsgemäß ist die Förderwendel (13) gegenüber dem Bohrerschaft (11) mit einem axialen Spiel "s" ausgebildet, welches von einer Abstützfeder (15) zwischen Förderwendel (13) und Abstützvorrichtung (16) ausgeglichen wird. Die Vorspannung der Abstützfeder (15) (Vorspannkraft $P_1$) ist derart bemessen, daß die normal beim Bohren auftretende axiale Kraft $P_2$ auf die Förderwendel (13) ausgeglichen wird, d. h. $P_1 \geqq P_2$. Hierdurch wird stets gewährleistet, daß die Förderwendel (13) immer mit festem Sitz und ohne Spiel gegen den Bohrerkopf (12) gepreßt wird. Die Abstützvorrichtung (16) kann gemäß Gebrauchsmuster GM 85 14 422 ausgebildet sein, wie eingangs beschrieben.

In Fig. 2 ist der Einsatzfall dargestellt, in welchem sich die Förderwendel (13) gegenüber dem Bohrerschaft (11) axial um den Betrag "s" verschieben muß. Beim Bohren, insbesondere in klüftigem Gestein (17), kann es durchaus vorkommen, daß sich bereits abgelöstes Gestein (18) zwischen Bohrloch (19) und Förderwendel (13) verklemmt, so daß die Förderwendel (13) am Durchdrehen blockiert ist, während das Hammerwerk den Bohrerschaft weiterhin vorwärtstreibt. In diesem Fall würde beispielsweise eine Kunststoff-Förderwendel leicht zerstört. Es ist deshalb notwendig, daß die Förderwendel (13) gegenüber dem Bohrerkopf außer Eingriff kommt, d. h. die formschlüssige Verbindung (20) am Bohrerkopf (12) muß gelöst werden. Durch diese axiale Kraftbeanspruchung $P_3$ kann sich die Förderwendel (13) erfindungsgemäß gegen den Druck der Feder (15) solange bewegen, bis der Bohrerkopf (12) bzw. der Bohrerschaft (11) sich frei drehen kann, während die Förderwendel (13) steht. In Fig. 2 hat sich deshalb die Abstützfeder (15) von der Ursprungslänge $s_1$ auf die Länge $s_2$, d. h. um den Betrag "s" zusammengeschoben. Die Oberkante (26) der Wendel wird demnach um den Betrag "s" axial nach unten geschoben (Fig. 2).

Auch beim Durchstoßen des Bohrwerkzeugs (10) bei der Herstellung von Durchbrüchen durch eine Wand (17) kann der Bohrerkopf (12) bereits durch die Wand durchtreten, während die Förderwendel (13) am restlichen Gestein hängenbleiben kann. Auch in diesem Fall wird durch die axiale Verschiebbarkeit die Drehkoppelung zwischen dem Bohrwerkzeug (11, 12) und der Förderwendel (13) gelöst. Durch diese Maßnahme kann beispielsweise auf aufwendige Bohrwerkzeuge mit Vierer-Bohrkreuzkopf verzichtet werden, bei welchem ein Verkanten der Förderwendel eher vermieden werden kann.

In Fig. 3 ist ein weiteres Ausführungsbeispiel der Erfindung dargestellt. Hier sind zwei Förderwendel (13) über eine formschlüssige Verbindung (21), bestehend aus Mitnahmestiften, miteinander verbunden, um eine Verlängerung der Förderwendel zu ermöglichen. Die Abstützfeder (15) stützt dann die untere Förderwendel (13) ab, während die Abstützvorrichtung (16) in der in Fig. 1 und 2 dargestellten unteren Einstichnut (22) befestigt ist.

Anstelle der Mitnahme- und Befestigungsbolzen (21) kann selbstverständlich auch eine andere formschlüssige Verbindung, zum Beispiel Keil und Keilnut o. dgl. verwendet werden.

Die Erfindung ist nicht auf das dargestellte und beschriebene Ausführungsbeispiel beschränkt. Sie umfaßt auch alle fachmännischen Abwandlungen und Weiterbildungen des erfindungsgemäßen Bohrwerkzeugs.

## Ansprüche

1. Bohrwerkzeug zur Herstellung von Bohrungen oder Durchbrüchen in Beton oder Mauerwerk, mit austauschbarer Förderwendel, die mittels einer am Bohrerschaft sich abstützenden Abstützvorrichtung axial gesichert und am Bohrerkopf verdrehsicher gelagert ist, dadurch gekennzeichnet, daß zwischen dem zum Bohrerschaft hin (11) weisenden Ende der Förderwendel (13) und der am Bohrerschaft (11) fixierten Abstützvorrichtung (16) eine Abstützfeder (15) zur axialen Verspannung der Förderwendel (13) vorgesehen ist, wobei ein axialer Federweg "s" eine axiale Verschiebbarkeit der Förderwendel (13) relativ zum Bohrerschaft (11) bzw. zum Bohrerkopf (12) zuläßt und daß der axiale Federweg "s" und damit die axiale Verschiebbarkeit der Förderwendel (13) derart bemessen ist, daß die Förderwendel (13) im Bereich des Bohrerkopfs (12) außer Eingriff kommt und Bohrerschaft (11) und Förderwendel (13) frei gegeneinander verdrehbar sind.

2. Bohrwerkzeug nach Anspruch 1, dadurch gekennzeichnet, daß die Abstützfeder (15) eine Wickelrichtung (23) aufweist, die entgegengesetzt zur Drehrichtung (24) der Förderwendel (13) verläuft.

3. Bohrwerkzeug nach Anspruch 1 oder 2, dadurch gekennzeichnet, daß die Förderwendel (13) als Aufsteckwendel aus Kunststoff, aus Leichtmetall o. dgl. besteht, mit einem Förderschnecken-Vollprofil (25).

4. Bohrwerkzeug nach einem oder mehreren der vorhergehenden Ansprüche, dadurch gekennzeichnet, daß die Förderwendel als Aufsteckwendel aus einem gewickelten Profil (13') besteht.

5. Bohrwerkzeug nach einem oder mehreren der vorhergehenden Ansprüche, dadurch gekennzeichnet, daß mehrere Förderwendeln (13) axial hintereinander auf den Bohrerschaft (11) aufsteckbar sind, wobei formschlüssige Verbindungselemente (21), wie Mitnahmestifte, Keil und Keilnut o. dgl. als Verdrehsicherung vorgesehen sind.

6. Bohrwerkzeug nach einem oder mehreren der vorhergehenden Ansprüche, dadurch gekennzeichnet, daß die Federvorspannung $P_1$ der Abstützfeder (15) derart bemessen ist, daß sie beim Bohren auftretende Axialkräfte $P_2$ auf die Förderwendel (13) kompensiert.

7. Bohrwerkzeug nach einem oder mehreren der vorhergehenden Ansprüche, dadurch gekennzeichnet, daß die Abstützfeder (15) eine flache Federkennlinie aufweist, mit einer Abstützkraft von $P_1 \geqq 200$ N.

## Claims

1. Drill bit for making bores or through penetrations in concrete or masonry, comprising a replaceable conveyor screw, which is axially secured by means of a support device bearing against the bit shank and is torsionally locked on the bit head, characterized in that, between the end of the conveyor screw (13) nearest the bit shank (11) and the support device (16) fixed to the bit shank (11), a support spring (15) for axially bracing the conveyor screw (13) is provided, an axial spring travel "s" permitting an axial displacement capability of the conveyor screw (13) relative to the bit shank (11) and to the bit head (12), and that the axial spring travel "s" and therefore the axial displacement capability of the conveyor screw (13) is so designed that the conveyor screw (13) comes out of engagement in the region of the bit head (12) and the bit shank (11) and conveyor screw (13) are freely rotatable relative to each other.

2. Drill bit according to Claim 1, characterized in that the support spring (15) has a direction of winding (23) which is in opposition to the direction of rotation (24) of the conveyor screw (13).

3. Drill bit according to Claim 1 or 2, characterized in that the conveyor screw (13) is of plastics material, light metal or the like as push-on screw, with a conveyor screw solid profile (25).

4. Drill bit according to one or more of the preceding Claims, characterized in that the conveyor screw, as push-on screw, consists of a wound profile (13').

5. Drill bit according to one or more of the preceding Claims, characterized in that several conveyor screws (13) can be pushed axially onto the bit shank (11) one behind another, form-fitting connecting elements (21), such as entraining pins, wedge and wedge-shaped groove or the like, being provided as torsional lock.

6. Drill bit according to one or more of the preceding Claims, characterized in that the spring prestress $P_1$ of the support spring (15) is so designed that it compensates axial forces $P_2$ on the conveyor screw (13) that occur during drilling.

7. Drill bit according to one or more of the preceding Claims, characterized in that the support spring (15) has a flat spring characteristic, with a support force of $P_1 \geq 200$ N.

## Revendications

1. Outil de perçage, pour réaliser des perçages ou trous dans du béton ou de la maçonnerie, à hélice d' extraction échangeable, qui est bloquée axialement au moyen d'un dispositif d'appui s'appuyant sur l'arbre du foret et est montée sur la tête du foret sans torsion, caractérisé en ce que, entre l'extrémité de l'hélice d' extraction (13), tournée vers l'arbre du foret (11), et le dispositif d'appui (16) fixé à l'arbre du foret (11), est prévu un ressort d'appui (15) pour le serrage axial de l'hélice d'extraction (13), une course élastique axiale "s" autorisant un déplacement axial de l'hélice d'extraction (13) par rapport à l'arbre du foret (11) ou par rapport à la tête du foret (12), et en ce que la course élastique "s" et, ainsi, le déplacement axial possible de l'hélice d'extraction (13) sont tels que l'hélice d'extraction (13) dans la zone de la tête du foret (12) se désengage et l'arbre du foret (11) et l'hélice d'extraction (13) peuvent tourner librement l'un par rapport à l'autre.

2. Outil de perçage selon la revendication 1, caractérisé en ce que le ressort d'appui (15) présente un sens d'enroulement (23), qui est opposé au sens de rotation (24) de l'hélice d'extraction (13).

3. Outil de perçage selon la revendication 1 ou 2, caractérisé en ce que l'hélice d'extraction (13), en tant qu'hélice creuse, est constituée de matière synthétique, de métal léger ou analogue, avec un profil plein (25) de vis sans fin.

4. Outil de perçage selon une ou plusieurs des revendications précédentes, caractérisé en ce que l'hélice d'extraction, en tant qu'hélice creuse, est constituée d'un profilé enroulé (13').

5. Outil de perçage selon une ou plusieurs des revendications précédentes, caractérisé en ce que plusieurs hélices d'extraction (13) peuvent être montées, axialement l'une derrière l'autre, sur l'arbre du foret (11), des éléments de liaison mécaniques (21), comme des broches d'entraînement, une clavette et un logement de clavette, ou analogue, étant prévus en tant que fixation en torsion.

6. Outil de perçage selon une ou plusieurs des revendications précédentes, caractérisé en ce que la précontrainte $P_1$ du ressort d'appui (15) est telle qu'elle compense les forces axiales $P_2$, apparaissant lors du perçage, sur l'hélice d'extraction (13).

7. Outil de perçage selon une ou plusieurs des revendications précédentes, caractérisé en ce que le ressort (15) présente une courbe caractéristique plate, avec une force d'appui de $P_1 \geq 200$ N.

**EP 0 264 657 B1**

Fig 1

Fig 2

6

Fig 3

Fig 4